# EUROPEAN PATENT APPLICATION

(11) **EP 2 573 319 A2**
(43) Date of publication of application: **27.03.2013**
(21) Application number: 12184390.8
(22) Date of filing: 14.09.2012
(51) Int. Cl.: F01D 5/14, F01D 9/02, F02C 3/20, F02C 3/26, C10L 1/10

(54) **Turbomachine configured to burn ash-bearing fuel oils and method of burning ash-bearing fuel oils in a turbomachine**

(30) Priority: 23.09.2011 US 201113242200
(71) Applicant: GENERAL ELECTRIC COMPANY, Schenectady, NY 12345 (US)
(72) Inventor: Wagner, Mark Joseph, Greenville, SC South Carolina 29615 (US); Siden, Gunnar Leif, Greenville, SC South Carolina 29615 (US); Vipperla, Ravi-Kumar, Greenville, SC South Carolina 29615 (US)
(74) Representative: Cleary, Fidelma

(57) **Abstract**

According to one aspect of the invention, a turbomachine (2) includes a compressor portion (4), a combustor portion (10) fluidly connected to the compressor portion (4), and a turbine portion (6) fluidly connected to the combustor portion (10) and mechanically coupled to the compressor portion (4). The combustor portion (10) is configured and disposed to burn ash-bearing fuel oils. The turbine portion (6) includes a first stage (20) having a first plurality of airfoils (30,32), and a second stage (24) having a second plurality of airfoils (40,42). The first plurality of airfoils (30,32) have a trailing edge discharge member. The second plurality of airfoils (40,42) is clocked circumferentially relative to the first plurality of airfoils (30,32). The first plurality of airfoils (30,32) are configured and disposed to direct an ash depleted flow upon corresponding adjacent ones of the second plurality of airfoils (40,42).

## Description

### BACKGROUND OF THE INVENTION

The subject matter disclosed herein relates to the art of turbomachines and, more particularly, to a turbomachine configured to burn ash-bearing fuel oils.

Generally, turbomachines combust clean burning fuel oils to drive a turbine which powers, for example, generators, pumps and the like. Clean burning fuel oils, such as natural gas, refined oil, syngas and the like are passed to a combustor and mixed with air and/or other diluents to form a combustible mixture. The mixture is combusted to form hot gases that are passed to a turbine portion. In the turbine portion, the hot gases are expanded through a series of stators and rotors. The rotors convert thermal energy from the hot gases to mechanical, rotational energy. The use of clean burning fuel oils results the formation of hot gases that are substantially ash free. Clean burning fuel oils also lead to lower overall emissions from the turbomachine. At present, there is a desire to combust heavier fuel oils. Heavier fuel oil, or the fuel oil that remains after refining, is a lower cost alternative to current clean burning fuel oils. Heavier fuel oils create ash that is carried along with the hot gases through the turbine portion and deposited on internal components.

### BRIEF DESCRIPTION OF THE INVENTION

According to one aspect of the invention, a turbomachine includes a compressor portion, a combustor portion is fluidly connected to the compressor portion, and a turbine portion is fluidly connected to the combustor portion and mechanically coupled to the compressor portion. The combustor portion is configured and disposed to bum ash-bearing fuel oils. The turbine portion includes a first stage having a first plurality of airfoil members, and a second stage having a second plurality of airfoil members. The first plurality of airfoil members have a trailing edge discharge member fluidly connected to the compressor. The second plurality of airfoil members are clocked circumferentially relative to the first plurality of airfoil members. The first plurality of airfoil members are configured and disposed to direct an ash depleted flow upon corresponding adjacent ones of the second plurality of airfoil members.

According to another aspect of the invention, a method of burning ash-bearing fuel oils in a turbomachine includes combusting a heavy fuel to form an ash laden hot gas stream, guiding the ash laden hot gas stream toward a hot gas path of a turbine portion of the turbomachine, introducing a substantially ash free compressor air flow into the hot gas path, passing the substantially ash free compressor airflow and the ash laden hot gas stream across a plurality of first stage airfoil members, guiding the substantially ash free compressor airflow from each of the plurality of first stage airfoil members, forming an ash depleted air stream downstream of the trailing edge portion of each of the plurality of first stage nozzles, directing the ash depleted air stream toward an adjacent ones of a plurality of second stage airfoil members, and passing the ash depleted air stream across the corresponding adjacent ones of the plurality of second stage airfoil members.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a schematic view of a gas turbomachine configured to bum ash-bearing fuel oils; and
FIG. 2 is a schematic view of first and second stage airfoil members of a turbine portion of the gas turbomachine of FIG. 1.

The detailed description explains embodiments of the invention, together with advantages and features, by way of example with reference to the drawings.

### DETAILED DESCRIPTION OF THE INVENTION

In general, most turbomachines are configured to bum clean, non-heavy, refined fuel oils. Refined, non-ash-bearing fuel oils burn clean and generally produce little or no ash when combusted in a turbomachine combustor. Currently, refined, non-ash-bearing fuel oils are rising in cost. The rise in fuel cost results in a significant increase in turbomachine operating costs. As many turbomachines are used by utility companies to generate power, as well as in a wide array of other industries, the rise in fuel costs will lead to increased consumer costs for anything from electric power, natural gas, as well as numerous other commodities. The term ash-bearing fuel oils should be understood to describe fuel oils that when burned produce ash.

In order to avoid or defray rising fuel oils costs, many companies are turning to ash-bearing fuel oils to power their turbomachines. Ash-bearing fuel oils such as heavy fuel oil, heavy crude oil and light crude oil, or fuel left over after refining typically includes corrosive materials such as vanadium, nickel, iron, zinc, lead, calcium, magnesium and silicon, all of which lead to ash formation when combusted. In addition, corrosion inhibiters are also often times added to fuel to prevent corrosion that may result due to elements and products of combustion of Vanadium. The corrosion inhibiters also contribute to the ash content in the products of combustion entering turbomachine 2 following combustion. The ash is deposited on internal turbomachine parts such as nozzles and buckets. Over time, the ash will have a detrimental effect on the surfaces of the internal turbomachine parts. Up to the present, the use of ash-bearing fuel oils, while cheaper, has been avoided due to the high maintenance costs associated with cleaning/replacing the internal turbomachine components.

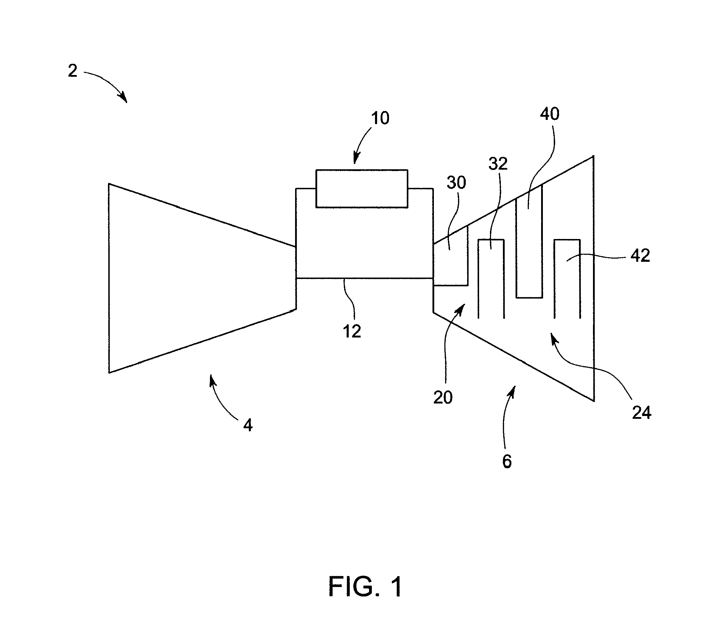

With initial reference to FIG. 1, a turbomachine, constructed in accordance with an exemplary embodiment, is indicated generally at 2. Turbomachine 2 includes a compressor portion 4 operatively connected to a turbine portion 6 through a combustor portion 10. Combustor portion 10 is configured to receive ash-bearing fuel oils that typically produce ash when combusted. Compressor portion 4 is also operatively connected with turbine portion 6 via a common compressor turbine shaft 12.

In the exemplary embodiment shown, turbine portion 6 includes a first stage 20 and a second stage 24. As shown, second stage 24 is positioned downstream from first stage 20. At this point it should be appreciated that the number of stages in turbine portion 6 can vary. First stage 20 includes a plurality of first stage stator airfoil members, one of which is indicated at 30, and a plurality of first stage rotor airfoil members, one of which is indicated at 32. First stage rotor airfoil members 32 are positioned down stream from first stage stator airfoil members 30. Similarly, second stage 24 includes a plurality of first stage stator airfoil members, one of which is indicated at 40, and a plurality of second stage rotor airfoil members one of which is indicated at 42. Second stage rotor airfoil members 42 are positioned downstream from second stage stator airfoil members 40.

With this arrangement, hot, ash laden gases 50 pass from combustor portion 10 toward first stage 20. The hot, ash laden gases 50 flow over the plurality of first stage stator airfoil members 30 toward the plurality of first stage rotor airfoil members 32. The plurality of first stage stator airfoil members 30 conditions hot, ash laden gases 50 to flow along a desired flow path so as to impact the plurality of first stage rotor airfoil members 32. In response to the flow of hot, ash laden gases 50, the plurality of first stage rotor airfoil members 32 begin to rotate. Hot, ash laden gases 50 then contoured to expand over subsequent stages to develop rotational energy that is output from turbine portion 6. As will be discussed more fully below, the plurality of first stage stator airfoil members 30, first stage rotor airfoil members 32, second stage stator airfoil members 40, and second stage rotor airfoil members 42 are configured and arranged to mitigate ash deposition on airfoils surfaces (not separately labeled). In this manner, the exemplary embodiments provide a system for burning HFOs while avoiding maintenance issues, such as pitting, corrosion and the like associated with ash deposits.

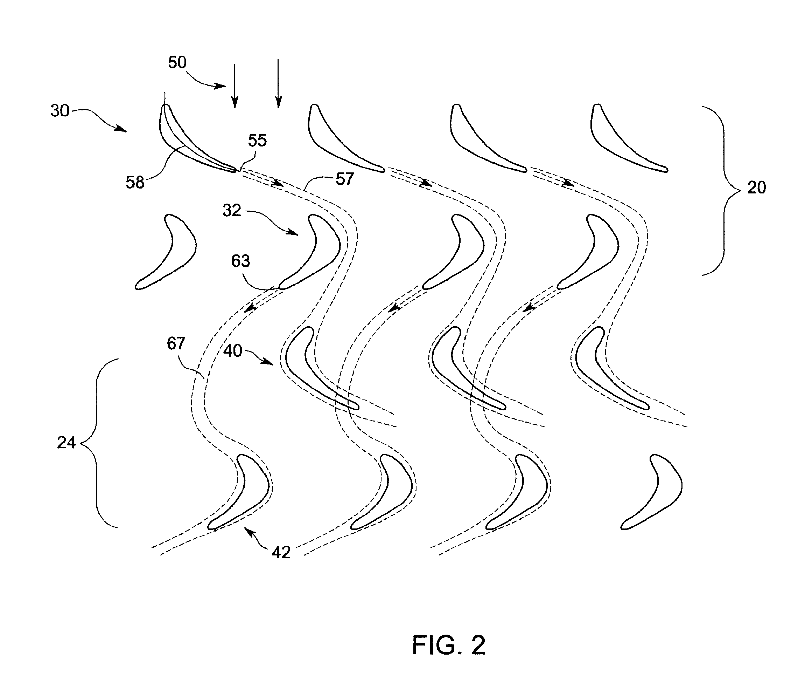

In accordance with the exemplary embodiment, each of the plurality of first stage stator airfoil members 30 includes a compressor air discharge member such as shown at 55 in FIG. 2. Compressor air discharge member 55 is positioned at a trailing edge (not separately labeled) of each of the plurality of first stage stator airfoil members 30 and is fluidly connected with compressor portion 4. In this manner, substantially ash free compressor air flow 57 is introduced into turbine portion 6. As will be discussed more fully below, substantially ash free compressor air flow 57 forms an ash free layer about subsequent adjacent ones of the plurality of second stage stator airfoil members 40 to prevent or at least substantially reduce ash deposition onto airfoil surfaces.

In addition, each of the plurality of first stage stator airfoil members 30 is formed having a chord length 58 that is longer than a chord length of a stator airfoil for a gas turbomachine the bums non-ash-bearing fuel oils. In accordance with one aspect of the exemplary embodiment, chord length 58 of each of the plurality of first stage stator airfoil members 30 is up to twice as long as the a chord length for stator airfoils in non-HFO burning gas turbomachines. The increase in chord length facilitates downstream substantially ash free compressor air flow.

In further accordance with the exemplary embodiment, the plurality of second stage stator airfoil members 40 is clocked or circumferentially off-set from corresponding ones of each of the plurality of first stage stator airfoil members 30. In accordance with one aspect of the exemplary embodiment, clocking is achieved by rotationally positioning each of the plurality of second stage stator airfoil members 40 at an axial location that is between corresponding ones of each of the plurality of first stage stator airfoil members 30. In accordance with another aspect of the exemplary embodiment, clocking is achieved by reducing the number of the plurality of first stage stator airfoil members 30 and the plurality of second stage stator airfoil members 40 while also increasing an overall chord length of the airfoil members. Generally, the number of stator airfoil members in each stage should be equal or an integer multiple thereof. Clocking the plurality of second stage stator airfoil members 40 relative to the plurality of first stage stator airfoil members 30 leads substantially ash free compressor air flow 57 to pass over subsequent adjacent airfoil surfaces to substantially reduce ash deposition.

In accordance with another aspect of the exemplary embodiment, each of the plurality of first stage rotor airfoil members 32 includes a compressor air discharge member such as shown at 63. Compressor air discharge member 63 is positioned at a trailing edge (not separately labeled) of each of the plurality of first stage rotor airfoil members 32 and is fluidly connected with compressor portion 4. In this manner, a second substantially ash free compressor air flow 67 is further introduced into turbine portion 6. As will be discussed more fully below, second substantially ash free compressor air flow 67 forms an ash free layer about subsequent adjacent ones of the plurality of second stage rotor airfoil members 42 to prevent or at least substantially reduce ash deposition onto airfoil surfaces.

In further accordance with the exemplary embodiment, the plurality of second stage rotor airfoil members 42 is clocked or circumferentially off-set from corresponding ones of each of the plurality of first stage rotor airfoil members 32. In accordance with one aspect of the exemplary embodiment, clocking is achieved by rotationally positioning each of the plurality of second stage rotor airfoil members 42 at an axial location that is between corresponding ones of each of the plurality of first stage rotor airfoil members 32. In accordance with another aspect of the exemplary embodiment, clocking is achieved by reducing the number of the plurality of second stage rotor airfoil members 42 relative to the number of the plurality of first stage rotor airfoil members 32. In accordance with one exemplary aspect, the number of the plurality of second stage rotor airfoil members 42 may be reduced to as much as half of the number of the plurality of first stage rotor airfoil members 32. In a manner similar to that described above, clocking the plurality of second stage rotor airfoil members 42 relative to the plurality of first stage rotor airfoil members 32 leads second substantially ash free compressor air flow 67 to pass over subsequent adjacent airfoil surfaces to reduce ash deposition.

At this point it should be understood that the exemplary embodiments describe a turbomachine that is configured to bum ash-bearing fuel oils or fuel oils that that produce ash when combusted. The turbomachine is configured to direct a substantially ash free air flow over airfoil surface in the turbine portion to mitigate ash deposition and thus reduce the need for ash related maintenance. The introduction of the substantially ash free compressor air, along with the particular construction and orientation of the airfoil members creates a broad ash free cooling flow rate that passes over subsequent adjacent downstream airfoil surfaces to reduce ash deposition.

In addition, it should be understood that while only the first stage stator airfoil members and rotor airfoil member are described as having an increased chord length and compressor discharge members, additional downstream stages may include airfoil members similarly constructed. Finally, in addition to the above, it has been shown that by reducing through flow velocity of the hot-ash laden gases (hot gases are passed trough the hot gas path at a lower Mach number than in non-ash-bearing fuel oil turbomachines) ash deposition is still further reduced. That is the hot-ash laden flow will possess a lower kinetic energy that leads to lower impact velocities which, in turn, leads to a reduced ash deposition.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A turbomachine (2) comprising:
a compressor portion (4);
a combustor portion (10) fluidly connected to the compressor portion (4), the combustor portion (10) being configured and disposed to bum ash-bearing fuel oils; and
a turbine portion (6) fluidly connected to the combustor portion (10) and mechanically coupled to the compressor portion (4), the turbine portion (6) including a longitudinal axis, a first stage (20) having a first plurality of airfoil members (30,32), and a second stage (24) having a second plurality of airfoil members (40,42), the first plurality of airfoil members (30,32) having a trailing edge discharge member fluidly connected to the compressor portion (4) and the second plurality of airfoil members (40,42) being clocked circumferentially relative to the first plurality of airfoil members (30,32), the first plurality of airfoil members (30,32) being configured and disposed to direct an ash depleted flow upon corresponding adjacent ones of the second plurality of airfoil members (40,42).

2. The turbomachine according to claim 1, wherein the first plurality of airfoil members (30,32) include a chord length (58) that is longer than a chord length of an airfoil in a gas turbine configured to bum fuel oils other than ash-bearing fuel oils.

3. The turbomachine according to claim 1 or 2, wherein the second plurality of airfoil members (40,42) is an integer multiple of the first plurality of airfoil members (30,32).

4. The turbomachine according to any of claims 1 to 3, wherein each of the first (30,32) and second pluralities (40,42) of airfoil members constitute turbine stators.

5. The turbomachine according to any of claims 1 to 3, wherein each of the first (30,32) and second pluralities (40,42) of airfoil members constitute turbine buckets.

6. A method of burning ash-bearing fuel oils in a turbomachine (2), the method comprising:
combusting a heavy fuel to form an ash laden hot gas stream (50);
guiding the ash laden hot gas stream (50) toward a hot gas path of a turbine portion (6) of the turbomachine (2);
introducing a substantially ash free compressor air flow (59) into the hot gas path;
passing the substantially ash free compressor airflow (57) and the ash laden hot gas stream across a plurality of first stage airfoil members (30,32);
guiding the substantially ash free compressor air (57) of each of the plurality of first stage airfoil members (30,32);
forming an ash depleted air stream (67) downstream of the trailing edge portion of each of the plurality of first stage air foil members (30,32);
directing the ash depleted air stream (67) toward an adjacent ones of a plurality of second stage airfoil members (40,42); and
passing the ash depleted air stream (67) across the corresponding adjacent ones of the plurality of second stage airfoil members (40,42).

7. The method of claim 6, wherein, forming the ash depleted air stream (67) includes passing the substantially ash free compressor (57) air across an airfoil having a chord length (58) that is longer than a chord length of an airfoil in a gas turbine configured to bum fuel oils other than ash-bearing fuel oils.

8. The method of claim 6 or 7, wherein directing the ash depleted air stream toward the adjacent ones of a plurality of second stage airfoil members (40,42) includes clocking the adjacent ones of the plurality of second stage airfoil members (40,42) circumferentially relative to each of the plurality of first stage airfoil members (30,32).

9. The method of any of claims 6 to 8, wherein clocking the adjacent ones of the plurality of second stage airfoil members (40,42) circumferentially relative to each of the plurality of first stage airfoil members (30,32) includes directing the ash depleted air stream toward the plurality of second stage airfoil members (40,42) which constitute an integer multiple of the plurality of first stage airfoil members (30,32).

10. The method of any of claims 6 to 9, wherein combusting a heavy fuel comprises combusting a fuel including vanadium.

11. The method of any of claims 6 to 10, further comprising: reducing ash deposition on the plurality of second stage nozzles with the ash depleted air stream.

12. The method of any of claims 6 to 11, wherein, guiding the substantially ash free compressor air from each of the plurality of first stage airfoil members includes passing the substantially ash free compressor air from a trailing edge of each of the plurality of first stage airfoil members.
